# EUROPEAN PATENT SPECIFICATION

(11) **EP 4 307 702 B1**
(45) Date of publication and mention of the grant of the patent: **09.09.2026**
(21) Application number: 23730696.4
(22) Date of filing: 31.05.2023
(51) Int. Cl.: H04N 23/70, H04N 23/71, H04N 23/72, H04N 23/73, H04N 23/76, H04N 23/84, H04N 25/13, H04N 25/133, H04N 25/53, H04N 25/51, H04N 23/60, H04N 23/68

(54) **ELECTRONIC DEVICE INCLUDING IMAGE SENSOR AND OPERATING METHOD THEREOF**
ELEKTRONISCHE VORRICHTUNG MIT BILDSENSOR UND BETRIEBSVERFAHREN DAFÜR
DISPOSITIF ÉLECTRONIQUE COMPRENANT UN CAPTEUR D'IMAGE ET PROCÉDÉ DE FONCTIONNEMENT ASSOCIÉ

(30) Priority: 31.05.2022 KR 20220066768; 28.07.2022 KR 20220093727
(43) Date of publication of application: 17.01.2024
(73) Proprietor: Samsung Electronics Co., Ltd., Suwon-si, Gyeonggi-do 16677 (KR)
(72) Inventor: YOUN, Yeotak, Suwon-si, Gyeonggi-do 16677 (KR); PARK, Jaehyoung, Suwon-si, Gyeonggi-do 16677 (KR); KIM, Dongsoo, Suwon-si, Gyeonggi-do 16677 (KR); KANG, Kawang, Suwon-si, Gyeonggi-do 16677 (KR); KIM, Yunjeong, Suwon-si, Gyeonggi-do 16677 (KR); MOON, Inah, Suwon-si, Gyeonggi-do 16677 (KR); SHIMOKAWA, Shuichi, Suwon-si, Gyeonggi-do 16677 (KR); WON, Jonghoon, Suwon-si, Gyeonggi-do 16677 (KR)
(74) Representative: HGF
(86) International application number: PCT/KR2023/007454
(87) International publication number: WO 2023/234705

(56) References cited:
- JP-B2- 7 043 191
- KR-A- 20220 036 014
- KR-A- 20220 038 222
- KR-A- 20220 055 390
- US-A1- 2016 173 793
- US-A1- 2017 366 723
- US-A1- 2019 005 356
- US-A1- 2022 086 381

## Description

### [Technical Field]

The disclosure relates to a technology for controlling exposure of an image sensor by using data output from an image sensor including a color filter array.

### [Background Art]

In general, a mobile device employs a complementary metal oxide semiconductor (CMOS) image sensor to provide an image capture function such as a photo or video. Because the image sensor detects the brightness of incident light, an image obtained through the image sensor is a black and white image rather than a color image. In order to obtain a color image, a color filter array that passes light of a specific color (e.g., red (R), green (G), and blue (B)) is disposed in the image sensor for each pixel. Each pixel of the image sensor detects a channel value of color signals passing through the color filter array.

A plurality of pixels are integrated in the image sensor, and each pixel converts light input to the pixel into an electrical signal by using a photodiode or the like. In this case, when too much light is input to a pixel, the corresponding pixel may be saturated. When the pixel of the image sensor is saturated, defects such as false color may occur in a region corresponding to the saturated pixel in captured images, and thus, the electronic device controls exposure of the image sensor in various ways.

US 2017/366723 A1 discloses, according to its abstract, an imaging apparatus, imaging method and program that enable automatic exposure control on a captured image in a non-Bayer pattern by an exposure control method designed for captured images in Bayer patterns. When a Bayering process is performed on a captured image in an RGBW pixel array, a level correction unit corrects the signal level of the captured image so that an earlier level that is the signal level of each white pixel with the highest sensitivity in the captured image prior to the Bayering process becomes equal to a later level that is the signal level of each green pixel to be used in exposure control on an image in a Bayer pattern that is the RGB image after the Bayering process. The automatic exposure control is based on colour converted data.

### [Disclosure of Invention]

### [Technical Problem]

Recently, as a method for improving the sensitivity of an image sensor, an image sensor including a color filter array of a different pattern is being developed instead of a color filter array of a general RGB (red, green, blue) pattern. In the case of the RGB pattern color filter array, because each color filter passes only a specific wavelength band, only a part of actual incident light (e.g., 1/3 of all incident light) may be input to each pixel. However, in the case of the color filter array with a pattern other than the RGB pattern, for example, RGBW (red, green blue, white), RYYB (red, yellow, yellow, blue), or CMY (cyan, magenta, yellow) pattern, the wavelength band passing through the color filter is widened, thereby improving the sensitivity of the image sensor compared to the RGB pattern.

However, when an image signal processor (ISP) that receives image data from the image sensor and processes the same may process only image data corresponding to the RGB pattern, the image sensor including a color filter array of a pattern other than the RGB pattern converts image data corresponding to another pattern (e.g., RGBW, RYYB, or CMY pattern) to correspond to the RGB pattern and outputs the converted image data. In this case, when the image data of the pattern different from RGB (e.g., RGBW, RYYB, or CMY pattern) is converted into the RGB pattern, the brightness of the image data or the size of the signal may be reduced. Accordingly, when the image signal processor (ISP) controls exposure of the image sensor by using the image data converted into the RGB pattern, accuracy of controlling exposure of the image sensor may decrease.

### [Solution to Problem]

The scope of the present invention is determined according to the independent claims. Various embodiments of the present invention are outlined in the dependent claims.

### [Advantageous Effects of Invention]

According to various embodiments disclosed in this document, accuracy of controlling the exposure of the image sensor may be improved compared to a case where the ISP controls the exposure of the image sensor based on image data converted into an RGB pattern. For example, the electronic device may control exposure of the image sensor so that saturated pixels among pixels of the image sensor decrease. Accordingly, the electronic device may capture images with improved quality. For example, the electronic device may obtain an image with reduced defects such as color errors.

Effects obtainable in the disclosure are not limited to the effects mentioned above, and other effects not mentioned may be clearly understood by those skilled in the art from the description below.

### [Brief Description of Drawings]

FIG. 1 is a block diagram of an electronic device in a network environment according to various embodiments.
FIG. 2 is block diagram illustrating a camera module according to various embodiments.
FIG. 3 is a block diagram illustrating a hardware configuration included in an electronic device according to an embodiment.
FIG. 4 illustrates an example of a first pattern of a color filter array included in an electronic device and an example of a second pattern distinct from the first pattern according to an embodiment.
FIG. 5 illustrates an example of an image histogram of first image data corresponding to a first pattern and an image histogram of second image data corresponding to a second pattern, obtained by an electronic device according to an embodiment.
FIG. 6 illustrates a flow of an operation in which a processor controls exposure of an image sensor by using characteristic information related to first image data, according to an embodiment.
FIG. 7 illustrates a flow of an operation in which a processor controls exposure of an image sensor by using characteristic information in an electronic device according to an embodiment.
FIG. 8 illustrates an example of characteristic information provided by an image sensor to a processor according to an embodiment.
FIG. 9 illustrates another example of characteristic information provided by an image sensor to a processor according to an embodiment.
FIG. 10 illustrates another example of characteristic information provided by an image sensor to a processor according to an embodiment.

Regarding the description of the drawings, the same or similar reference numerals may be used for the same or similar elements.

### [Mode for Invention]

Hereinafter, various embodiments of the disclosure will be described with reference to the accompanying drawings. However, it should be understood that this is not intended to limit the disclosure to the specific embodiments, and includes various modifications, and/or alternatives of the embodiments of the disclosure.

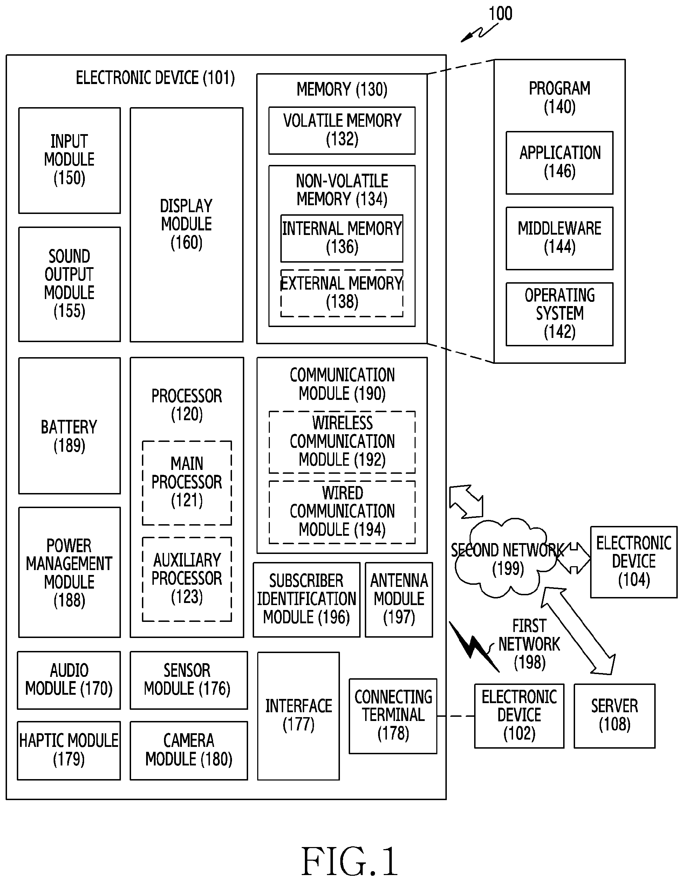

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

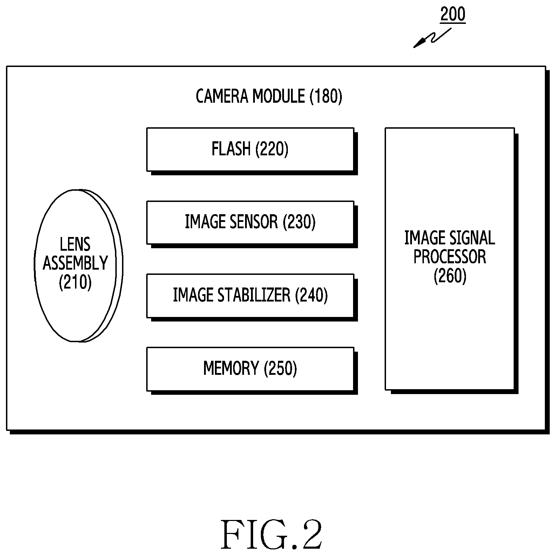

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as an RGB sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

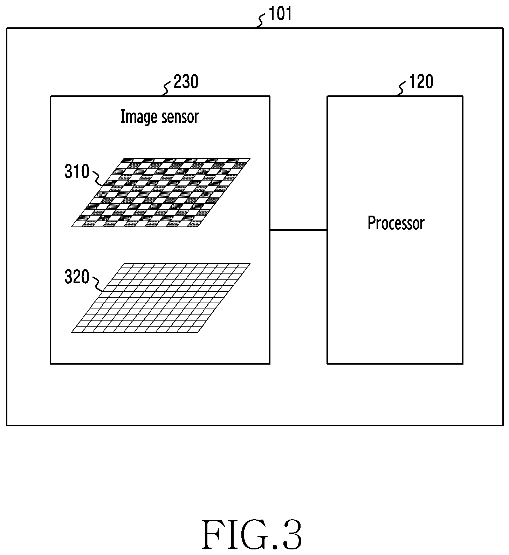

FIG. 3 is a block diagram illustrating a hardware configuration included in an electronic device according to an embodiment.

The electronic device 101 includes an image sensor 230 and a processor 120 electrically connected to the image sensor 230. For example, the electronic device 101 of FIG. 3 may correspond to the electronic device 101 of FIG. 1, and the processor 120 of FIG. 3 may correspond to the processor 120 of FIG. 1. In addition, the image sensor 230 of FIG. 3 may correspond to the image sensor 230 of FIG. 2. Among the configurations illustrated in FIG. 3, the contents described in FIGS. 1 and/or 2 may be simply described or omitted.

According to an embodiment, the image sensor 230 may be a complementary metal oxide semiconductor (CMOS) sensor. The image sensor 230 may convert light input to each pixel into an electrical signal.

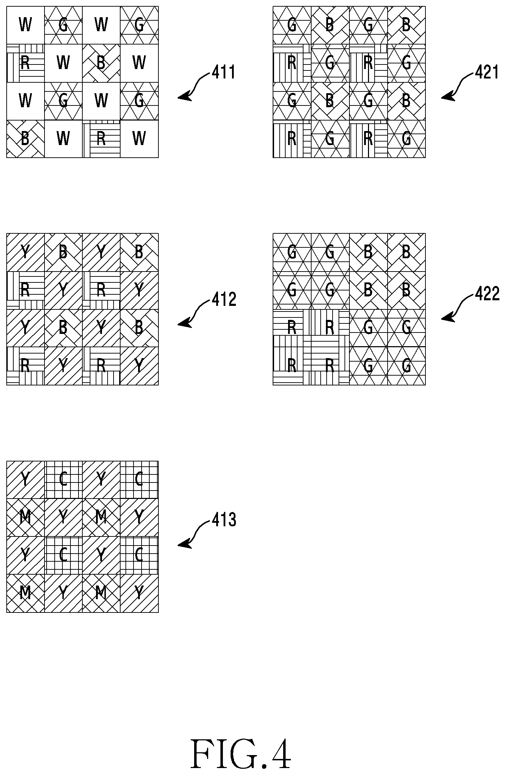

According to an embodiment, the image sensor 230 may include a color filter array 310 of a first pattern and a pixel array 320 disposed below the color filter array 310. The first pattern of the color filter array 310 will be described later with reference to FIG. 4.

According to an embodiment, the pixel array 320 included in the image sensor 230 may include a plurality of pixels. For example, each color filter of the color filter array 310 may correspond to a pixel of the pixel array 320. For instance, for each pixel of the pixel array 320 there is a respective color filter of the color filter array 310.

For another example, each color filter of the color filter array 310 may correspond to two or more pixels of the pixel array 320 (e.g., a 2x2 on-chip lens (OCL)). According to an embodiment, each of the pixels included in the pixel array 320 may output an electrical signal corresponding to light passing through the color filter array 310.

According to an embodiment, the processor 120 may be understood to include at least one processor. For example, the processor 120 may include at least one of an application processor (AP), an image signal processor (ISP), or a communication processor (CP).

The processor 120 obtains image data through the image sensor 230. The processor 120 may obtain an image frame based on the image data. According to an embodiment, the processor 120 may obtain various information (e.g., characteristic information) related to image data from the image sensor 230. The processor 120 may control exposure of the image sensor 230 by using information obtained from the image sensor 230. For example, an output gain of the image sensor 230 or a circuit related to the image sensor 230 may be adjusted or an exposure time may be adjusted. An operation in which the processor 120 controls the exposure of the image sensor 230 may be referred to as auto exposure (AE). However, the operation of controlling the exposure is not limited thereto. For example, when a camera of an electronic device includes a variable aperture, exposure related to image capture may be controlled by adjusting the variable aperture of the camera.

FIG. 4 illustrates an example of a first pattern of a color filter array included in an electronic device and an example of a second pattern distinct from the first pattern according to an embodiment.

According to an embodiment, the first pattern may include an RGBW pattern 411, a RYYB pattern 412, or a CMY pattern 413. According to an embodiment, the second pattern may include an RGB pattern (or Bayer pattern) 421 or a 2x2 RGB pattern 422.

In a conventional electronic device, an image sensor including a color filter array of RGB patterns 421 is used, but in the case of the color filter array of RGB patterns 421, because each color filter passes only a specific wavelength band, the light input to each pixel corresponds to 1/3 of the actual incident light, and thus the sensitivity of the image sensor may be reduced. However, as the size of pixels included in the image sensor decreases according to the recent demand for a high-pixel image sensor, a method for compensating for a decrease in sensitivity of the image sensor due to a decrease in area of a light-receiving region is being discussed. As a method for improving the sensitivity of the image sensor, a patterned color filter array 310 to which a color filter having a wider wavelength band to pass through than the RGB pattern 421 is applied may be used.

According to the invention, the electronic device 101 of the disclosure includes the color filter array 310 of the first pattern (e.g., RGBW pattern 411, RYYB pattern 412, CMY pattern 413). The image sensor 230 including the color filter array 310 of the first pattern (e.g., RGBW pattern 411, RYYB pattern 412, CMY pattern 413) has higher sensitivity than the image sensor including the color filter array of the second pattern (e.g., RGB pattern 421, 2x2 RGB pattern 422). For example, in the case of the RGBW pattern 411, because the white (W) color filter passes light in a wider wavelength band than the R, G, or B color filter, the sensitivity of the image sensor may be improved compared to the case of the RGB pattern 421. For another example, in the case of the RYYB pattern 412, because the yellow (Y) color filter passes light in a wider wavelength band than the R, G, or B color filter, the sensitivity of the image sensor may be improved compared to the case of the RGB pattern 421. For another example, in the case of the CMY pattern 413, because each of the cyan (C), magenta (M), or yellow (Y) color filter passes light in a wider wavelength band than the R, G, or B color filter, the sensitivity of the image sensor may be improved compared to the case of the RGB pattern 421.

The image sensor 230 includes the color filter array 310 of the first pattern (e.g., RGBW pattern 411, RYYB pattern 412, CMY pattern 413), and the image sensor 230 obtains first image data corresponding to the first pattern (e.g., RGBW pattern 411, RYYB pattern 412, CMY pattern 413) through the pixel array 320.

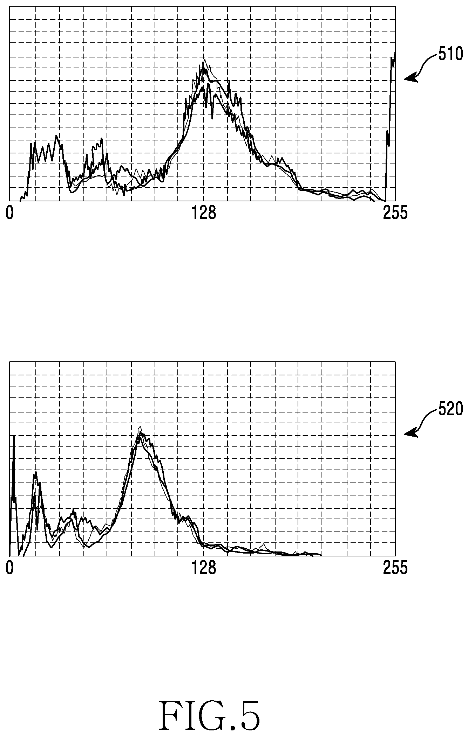

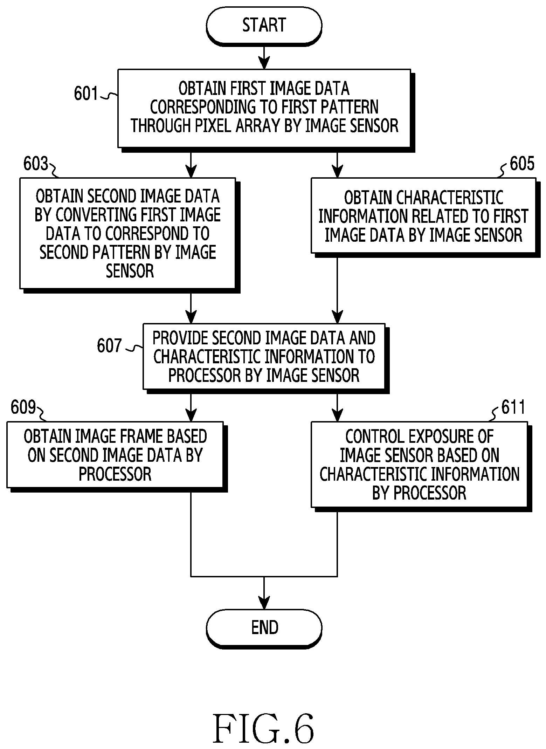

The image sensor 230 converts the first image data corresponding to the first pattern to correspond to the second pattern. The image sensor 230 provides second image data converted to correspond to the second pattern to the processor 120. For example, in a case where the processor 120 may perform an image processing for image data corresponding to the second pattern (e.g., RGB pattern 421, 2x2 RGB pattern 422) but may not perform an image processing for image data corresponding to the first pattern (e.g., RGBW pattern 411, RYYB pattern 412, CMY pattern 413), the image sensor 230 may provide the image data converted to correspond to the second pattern to the processor 120. The first image data and the second image data will be described later with reference to FIGS. 5 and 6.

FIG. 5 illustrates an example of an image histogram of first image data corresponding to a first pattern and an image histogram of second image data corresponding to a second pattern, obtained by an electronic device according to an embodiment. The image histogram represents a graph in which the output signal value of pixels included in the pixel array 320 is the x-axis and the number of pixels having each output signal value is the y-axis.

Referring to FIG. 5, a first graph 510 is an example of an image histogram of first image data corresponding to the first pattern (e.g., RGBW pattern 411, RYYB pattern 412, CMY pattern 413), and a second graph 520 is an example of an image histogram of second image data converted so that the first image data corresponds to the second pattern (e.g., RGB pattern 421, 2x2 RGB pattern 422).

Referring to FIG. 5, brightness of the second image data corresponding to the second pattern (e.g., RGB pattern 421, 2x2 RGB pattern 422) may be lower than brightness of the first image data corresponding to the first pattern (e.g., RGBW pattern 411, RYYB pattern 412, CMY pattern 413). Referring to the y value corresponding to x=255 in the first graph 510, a saturated pixel may exist in the first image data. However, referring to the y value corresponding to x=255 in the second graph 520, a saturated pixel may not exist in the second image data. That is, even if a saturated pixel exists in the pixel array 320 of the actual image sensor 230, the second image data converted to correspond to the second pattern may have an output value such as that a saturated pixel does not exist.

According to an embodiment, the light passing through the color filter (e.g., color filters with W, Y, C, or M colors) included in the first pattern (e.g., RGBW pattern 411, RYYB pattern 412, CMY pattern 413) may be light in a wavelength band obtained by summing the light passing through the color filter (e.g., color filters with R, G, or B colors) included in the second pattern (e.g., RGB pattern 421, 2x2 RGB pattern 422). For example, M color light passing through a magenta (M) color filter may correspond to light obtained by adding R color light passing through an R color filter and B color light passing through a B color filter. Accordingly, when converting the first image data corresponding to the first pattern (e.g., CMY pattern 413) to correspond to the second pattern (e.g., RGB pattern 421), only R color light among M color light may be used and B color light may be deleted. Accordingly, the brightness of the second image data may decrease compared to the first image data. A result of this may be the omission of a saturated pixel(s) in the second image data.

According to an embodiment, the processor 120 controls exposure of the image sensor 230 based on data obtained from the image sensor 230. For example, the processor controls exposure of the image sensor based on image data obtained from the image sensor. However, because the image sensor 230 of the disclosure provides the processor 120 with second image data whose brightness is reduced compared to the first image data, when the processor 120 controls the exposure of the image sensor 230 based on the second image data, the accuracy of AE may be degraded. For example, even when at least some of the pixels of the image sensor are saturated and the exposure of the image sensor needs to be reduced, because the second image data received by the processor is identified as not having a saturated pixel, exposure of the image sensor is not reduced, and thus, the AE accuracy may be degraded. The electronic device 101 of the disclosure may improve the AE accuracy and image quality through the operations described in FIGS. 6 to 10.

FIG. 6 illustrates a flow of an operation in which a processor controls exposure of an image sensor by using characteristic information related to first image data, according to an embodiment. Operations illustrated in FIG. 6 may be understood as being performed by the image sensor 230 or the processor 120.

In operation 601, the image sensor 230 obtains the first image data corresponding to the first pattern (e.g., RGBW pattern 411, RYYB pattern 412, CMY pattern 413) through the pixel array 320.

In operation 603, the image sensor 230 obtains the second image data by converting the first image data to correspond to the second pattern (e.g., RGB pattern 421, 2x2 RGB pattern 422).

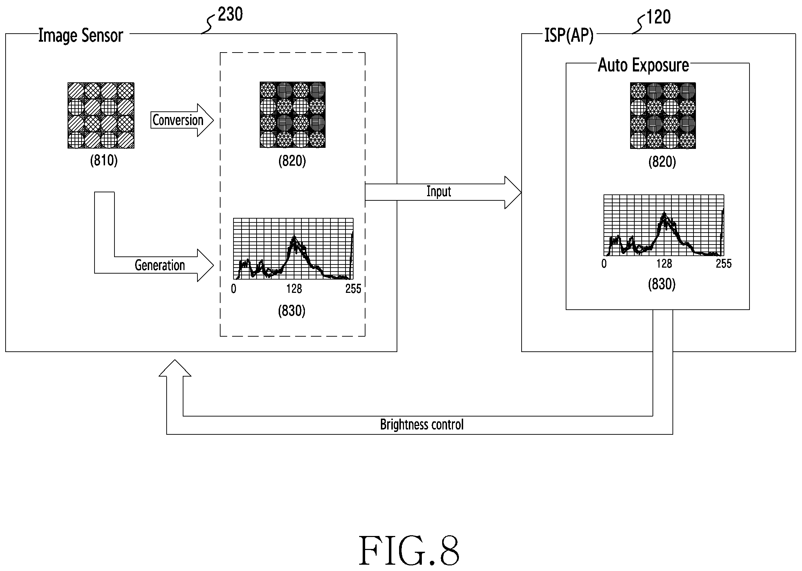

In operation 605, the image sensor 230 obtains characteristic information related to the first image data. According to an embodiment, the characteristic information may include at least one of an image histogram of the first image data, a reduced image of the first image data, and a conversion function for converting the first image data into the second image data. The characteristic information will be described later with reference to FIGS. 8, 9, and 10.

In operation 607, the image sensor 230 provides the second image data and characteristic information to the processor 120. According to an embodiment, the image sensor 230 may provide the processor 120 with the second image data corresponding to the second pattern instead of the first image data corresponding to the first pattern.

In operation 609, the processor 120 obtains an image frame based on the second image data. For example, the processor 120 capable of image processing image data of the second pattern generates an image frame by receiving the second image data converted into the second pattern from the image sensor 230. However, a method of generating an image frame based on the second image data by the processor 120 is not limited thereto. For example, the processor may obtain the first image data from the image sensor, convert the first image data to correspond to the second pattern, obtain the second image data, and then obtain an image frame based on the second image data.

In operation 611, the processor 120 controls exposure of the image sensor 230 based on the characteristic information. The processor 120 controls the exposure of the image sensor 230 based on characteristic information rather than the second image data received from the image sensor 230. For example, the processor 120 may adjust the exposure time of the image sensor 230 based on the characteristic information. For another example, the processor 120 may adjust an output gain of the image sensor 230 based on the characteristic information. According to various embodiments, the process of obtaining the image frame may be regarded as separate to the process of controlling exposure of the image sensor. In other words, various embodiments may include operations 601, 605, 607 (partly - the providing of the second image data may be omitted) and 611.

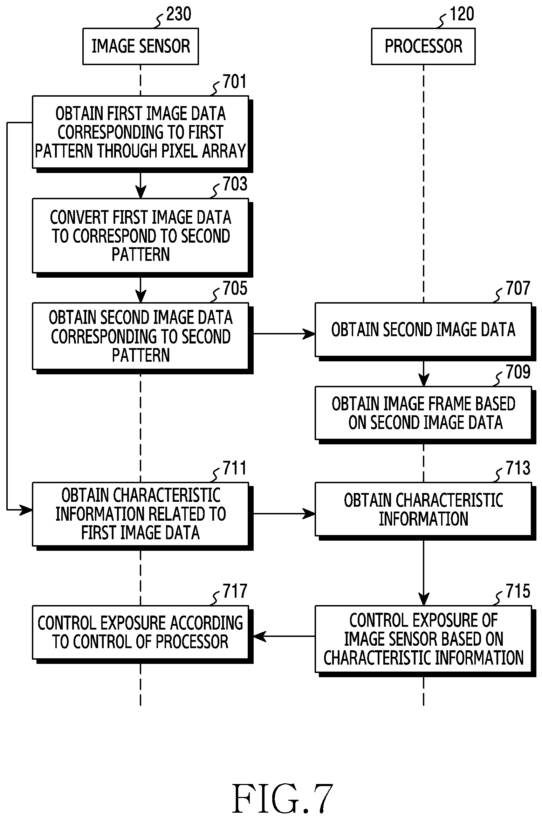

It will be appreciated that the order of one or more operations as illustrated in FIG. 6 may be changed. For example, the second image data may be provided to the processor separately to the characteristic information being provided to the image sensor; in which case, the characteristic information may be obtained before or after the second image data is provided to the processor. In another example, the characteristic information may be obtained before the second image data is obtained, may be obtained after the second image data is obtained, or may be obtained concurrently with obtaining the second image data. It will be understood that the operations may be re-ordered in other ways. FIG. 7 illustrates a flow of an operation in which a processor controls exposure of an image sensor by using characteristic information in an electronic device according to an embodiment. Operations illustrated in FIG. 7 may be performed by the image sensor 230 and the processor 120. It will be appreciated that the order of one or more operations as illustrated in FIG. 7 may be changed. For example, operations 711 and 713 may occur prior to operation 703, operation 705, operation 707 or operation 709 - in other words, the order of operations shown in FIG. 7 is not limiting.

In operation 701, the image sensor 230 obtains the first image data corresponding to the first pattern through the pixel array 320. Operation 701 may correspond to operation 601 of FIG. 6.

In operation 703, the image sensor 230 converts the first image data to correspond to the second pattern. According to an embodiment, in operation 705, the image sensor 230 obtains the second image data corresponding to the second pattern. Operations 703 to 705 may correspond to operation 603 of FIG. 6.

In operation 707, the processor 120 obtains the second image data from the image sensor 230. In operation 709, the processor 120 acquires an image frame based on the second image data. Operations 707 to 709 may correspond to operation 609 of FIG. 6.

In operation 711, the image sensor 230 obtains characteristic information related to the first image data. Operation 711 may correspond to operation 605 of FIG. 6.

In operation 713, the processor 120 obtains characteristic information related to the first image data from the image sensor 230. In operation 715, the processor 120 controls exposure of the image sensor 230 based on the characteristic information. According to an embodiment, in operation 717, the image sensor 230 may control exposure according to the control of the processor 120. Operations 713 to 717 may correspond to operation 611 of FIG. 6. According to various embodiments, the process of obtaining the image frame may be regarded as separate to the process of controlling exposure of the image sensor. In other words, various embodiments may include operations 701, 711, 713, 715 and 717.

FIG. 8 illustrates an example of characteristic information provided by an image sensor to a processor according to an embodiment.

Referring to FIG. 8, characteristic information provided to the processor 120 by the image sensor 230 may be an image histogram 830 of the first image data. For example, the image histogram 830 of the first image data may correspond to the first graph 510 of FIG. 5. According to an example, histogram 830 may provide information relating to the output signal value of pixels in a pixel array and information relating to a number of pixels in the pixel array having each output signal value.

The image sensor 230 obtains first image data 810 corresponding to the first pattern.

The image sensor 230 obtains second image data 820 by converting the first image data 810 to correspond to the second pattern. In addition, the image sensor 230 generates the image histogram 830 of the first image data.

According to an embodiment, the image sensor 230 may output the second image data 820 and the image histogram 830 of the first image data. According to an embodiment, the processor 120 may receive the second image data 820 and the image histogram 830 of the first image data from the image sensor 230.

According to an embodiment, the processor 120 may identify brightness information related to saturation of the pixel array 320 when obtaining the first image data based on the image histogram 830 of the first image data. For example, because the image histogram 830 of the first image data is information on the first image data 810 rather than the second image data 820, the processor 120 may identify a level of brightness compared to a degree of saturation of pixels of the image sensor 230 based on the image histogram 830. For example, brightness information may indicate a number of saturated pixels in the first image data 810, or a number of pixels in the first image data 810 having an output signal value greater than or equal to a predetermined value. According to an embodiment, the processor 120 may control exposure of the image sensor 230 based on the brightness information of the pixel array 320. For example, the processor 120 may reduce the exposure (e.g., decrease exposure time, or decrease output gain) of the image sensor 230 when it is determined that the brightness level is equal to or higher than a predetermined level (alternatively, when it is determined that the saturation pixel or degree of saturation of the pixel array 320 is equal to or greater than a specified level) based on the image histogram 830. For example, based on a number of saturated pixels in the first image data 810 being equal to or greater than a predetermined number, the processor 120 may determine that the brightness level is equal to or higher than the predetermined level. In another example, based on a predetermined number, or more, of pixels having an output signal value greater than or equal to a predetermined value, the processor 120 may determine that the brightness level is equal to or higher than the predetermined level. According to an embodiment, because generation of saturated pixels in the image sensor 230 may be prevented or reduced as the processor 120 controls the exposure of the image sensor 230 based on the image histogram 830 of the first image data, the electronic device 101 may obtain an image with reduced defects (e.g., color error due to color distortion when a saturated pixel occurs).

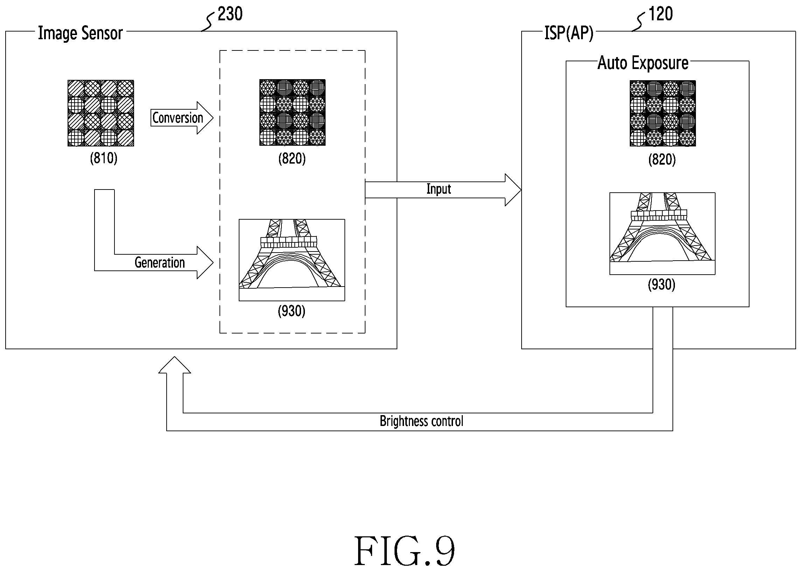

FIG. 9 illustrates another example of characteristic information provided by an image sensor to a processor according to an embodiment.

Referring to FIG. 9, characteristic information provided to the processor 120 by the image sensor 230 may be an image 930 obtained by reducing the first image data. The reduced image 930 may correspond to the first pattern (e.g., RGBW pattern 411, RYYB pattern 412, CMY pattern 413).

The image sensor 230 obtains the first image data 810 corresponding to the first pattern.

The image sensor 230 obtains the second image data 820 by converting the first image data 810 to correspond to the second pattern (e.g., RGB pattern 421, or 2x2 RGB pattern 422). For instance, as described previously, brightness of the second image data 820 corresponding to the second pattern may be lower than brightness of the first image data 810 corresponding to the first pattern. In addition, the image sensor 230 generates the image 930 in which the first image data 810 is reduced (as described in more detail above and below). Accordingly, the second image data 820 corresponds to the first image data 810 converted to correspond to the second pattern with reduced brightness compared to the first image data 810, while the image 930 may correspond to the first image data 810 with reduced size, reduced resolution or down-scaling.

According to an embodiment, the image sensor 230 may output the image 930 in which the second image data 820 and the first image data are reduced. According to an embodiment, the processor 120 may receive the image 930 in which the second image data 820 and the first image data are reduced from the image sensor 230.

The processor 120 identifies brightness information related to saturation of the pixel array 320 when obtaining the first image data based on the image 930 in which the first image data is reduced. For example, because the reduced image 930 is an image generated by reducing the first image data 810 rather than the second image data 820 and corresponds to the first pattern rather than the second pattern, the processor 120 identifies a brightness level (actual saturation level) compared to the level of saturation of the image sensor 230 based on the reduced image 930. For instance, the identified brightness level (e.g. actual saturation level, original saturation level etc.) may be considered in comparison to a level of saturation of the image sensor 230 as determined based on the second image data 820. For example, the processor 120 detects the brightness level of the image sensor 230 (e.g. an actual saturation level, an original saturation level etc. of the image sensor 230) based on the image 930 as opposed to detecting brightness information of the image sensor 230 (e.g., level of saturation of the image sensor 230) based on the second image data 820. In various examples, the brightness level may be included in the brightness information. The processor 120 controls exposure of the image sensor 230 based on the brightness information of the pixel array 320. For example, the processor 120 may reduce the exposure (e.g., decrease exposure time, or decrease output gain) of the image sensor 230 when it is determined that the brightness level is equal to or higher than a predetermined level (alternatively, when it is determined that the saturation pixel or degree of saturation of the pixel array 320 is equal to or greater than a specified level) based on the reduced image 930. According to an embodiment, because generation of saturated pixels in the image sensor 230 may be prevented or reduced as the processor 120 controls the exposure of the image sensor 230 based on the reduced image 930 of the first image data, the electronic device 101 may obtain an image with reduced defects (e.g., color error due to color distortion when a saturated pixel occurs).

When the image sensor 230 outputs the reduced image 930 together with the second image data 820, the processor 120 may determine the level of the output level of the first image data 810 based on the reduced image 930 and, when a saturated pixel exists, may also identify the position of the saturated pixel. For example, in comparison to a case where histogram 830 is provided to the processor 120, providing the reduced image 930 allows for a specific location of a saturated pixel(s) in the first image data 810 to be identified, and exposure control (e.g., controlling AE) or other processing by the processor 120 (examples of which are disclosed previously) may be performed based on the specific location (or specific locations corresponding to a plurality of saturated pixels, in case there are saturated pixels).

According to an embodiment, the image sensor 230 may provide the image histogram 830 of the first image data described in FIG. 8 and the reduced image 930 of the first image data described in FIG. 9 to the processor 120 together. For example, because a high-frequency subject included in the first image data 810 may be removed while the first image data 810 is reduced, the image sensor 230 may output the image histogram 830 together with the reduced image 930.It will be appreciated that the advantages of both methods may therefore be provided, referring to the advantages discussed above.

According to an embodiment, the image sensor 230 may use various methods to generate the reduced image 930 based on the first image data 810. For example, when the size of a region of saturated pixels included in the first image data 810 is small, it may be difficult to identify the presence of saturated pixels in the reduced image 930. Accordingly, the image sensor 230 may generate the reduced image 930 by using an estimation value rounding calculation using a threshold value. Alternatively, when the image sensor 230 down-scales n pixels of the first image data 810 to one pixel of the reduced image 930, the image sensor 230 may obtain the reduced image 930 by making the average value, the median value, or the maximum value of the n pixels the value of the one pixel.

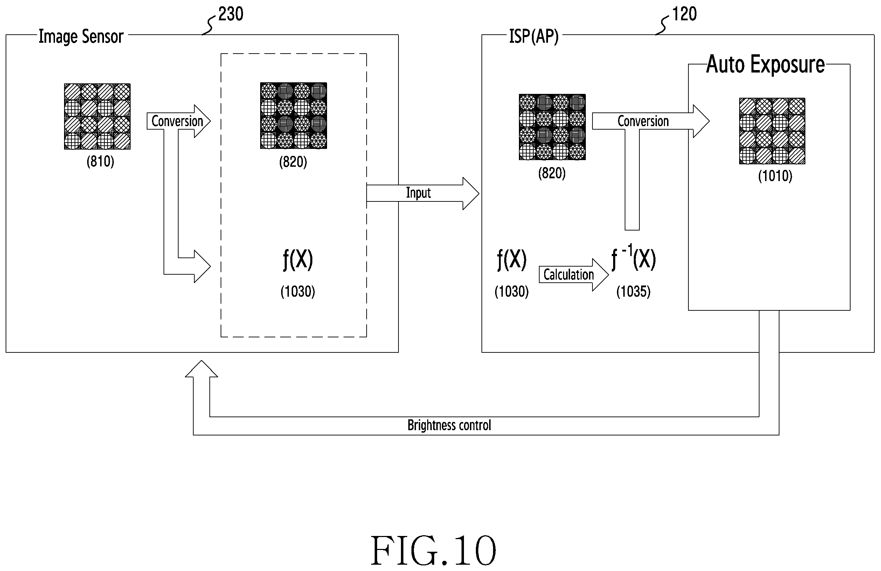

FIG. 10 illustrates another example of characteristic information provided by an image sensor to a processor according to an embodiment.

Referring to FIG. 10, characteristic information provided to the processor 120 by the image sensor 230 may be a conversion function 1030 for converting the first image data 810 into the second image data 820.

The image sensor 230 obtains the first image data 810 corresponding to the first pattern.

The image sensor 230 obtains the second image data 820 by converting the first image data 810 to correspond to the second pattern. The image sensor 230 may convert the first image data 810 into the second image data 820 by using a conversion function 1030. It will be appreciated that the person skilled in the art would be aware of various conversion functions for converting image data corresponding to a first pattern of a color filter array to image data corresponding to a second pattern of a color filter array, different to the first pattern. For example, a conversion function for converting image data corresponding to a RYYB pattern to image data corresponding to an RGB pattern, a conversion function for converting image data corresponding to a CMY pattern to image data corresponding to a 2x2 RGB pattern, etc.

According to an embodiment, the image sensor 230 may output the second image data 820 and the conversion function 1030. According to an embodiment, the processor 120 may receive the second image data 820 and the conversion function 1030 from the image sensor 230.

According to an embodiment, the processor 120 may obtain (or calculate) an inverse conversion function 1035 that is an inverse function of the conversion function 1030 based on the conversion function 1030 received from the image sensor 230.

According to an embodiment, the processor 120 may convert the second image data 820 to correspond to the first pattern by using the inverse conversion function 1035. The processor 120 may obtain third image data 1010 obtained by converting the second image data 820 to correspond to the first pattern by applying the inverse conversion function 1035 to the second image data 820. For example, the third image data 1010 may have an output signal value similar to that of the first image data 810.

According to an embodiment, the processor 120 may identify brightness information related to saturation of the pixel array 320 based on the third image data 1010. For example, because the third image data 1010 is data having a value similar to that of the first image data 810, the processor 120 may identify a brightness level (e.g., actual saturation level, original saturation level etc.) of the image sensor 230 based on the third image data 1010. For instance, the identified brightness level (e.g. actual saturation level, original saturation level etc.) may be considered in comparison to a level of saturation of the image sensor 230 as determined based on the second image data 820. For example, the processor 120 may detect the brightness level of the image sensor 230 (e.g. an actual saturation level, an original saturation level etc. of the image sensor 230) based on the third image data 1010 as opposed to detecting brightness information of the image sensor 230 (e.g., level of saturation of the image sensor 230) based on the second image data 820. In various examples, the brightness level may be included in the brightness information.

According to an embodiment, the processor 120 may control exposure of the image sensor 230 based on the brightness information of the pixel array 320. For example, the processor 120 may reduce the exposure (e.g., decrease exposure time, or decrease output gain) of the image sensor 230 when it is determined that the brightness level is equal to or higher than a predetermined level (alternatively, when it is determined that the saturation pixel or degree of saturation of the pixel array 320 is equal to or greater than a specified level) based on the third image data 1010. According to an embodiment, because generation of saturated pixels in the image sensor 230 may be prevented or reduced as the processor 120 controls the exposure of the image sensor 230 based on the third image data 1010, the electronic device 101 may obtain an image with reduced defects (e.g., color error due to color distortion when a saturated pixel occurs).

## Claims

1. An electronic device (101) comprising:
an image sensor (230) including a color filter array (310) of a first pattern (411, 412, 413) and a pixel array (320) disposed below the color filter array, and
at least one processor (120) electrically connected to the image sensor,
wherein the image sensor is configured to:
obtain (601; 701) first image data corresponding to the first pattern through the pixel array;
obtain (603; 705, 707) second image data by converting the first image data to correspond to a second pattern (421, 422) distinct from the first pattern;
obtain (605; 711, 713) characteristic information for identifying brightness information related to saturation of the pixel array when obtaining the first image data and before converting the first image data; and
provide (607) the second image data and the characteristic information to the at least one processor, and
wherein the at least one processor is configured to:
obtain (609; 709) an image frame based on the second image data provided by the image sensor;
control (611; 715, 717) exposure of a camera including the image sensor based on the characteristic information provided by the image sensor; and
wherein the first pattern comprises color filters of a wider wavelength band than any of the red, R, green, G, and blue, B, filters and the second pattern comprises R, G and B filters only; and
wherein the characteristic information comprises at least one of an image histogram (830) of the first image data or a reduced image (930) corresponding to the first image data with one of reduced size, reduced resolution or down-scaling.

2. The electronic device of claim 1, wherein the characteristic information further comprises a conversion function (1030) used for converting the first image data into the second image data and
wherein the at least one processor is configured to:
obtain an inverse conversion function, which is an inverse function of the conversion function, based on the conversion function;
obtain third image data by converting the second image data to correspond to the first pattern by using the inverse conversion function;
identify the brightness information related to saturation of the pixel array based on the third image data; and
control exposure of the camera based on the brightness information of the pixel array.

3. The electronic device of claim 1, wherein the reduced image corresponds to the first pattern, and
wherein the at least one processor is configured to:
identify, based on the characteristic information, the brightness information; and
control exposure of the camera based on the brightness information of the pixel array.

4. The electronic device of claim 3, wherein the at least one processor is configured to reduce exposure of the camera in response to determining that the brightness information of the pixel array is equal to or greater than a specified level.

5. The electronic device of claim 1, wherein the at least one processor is configured to adjust at least one of an exposure time of the image sensor or an output gain of the image sensor based on the characteristic information to control exposure of the camera.

6. The electronic device of claim 1, wherein brightness of the second image data is lower than that of the first image data.

7. An operation method of an electronic device, the operation method comprising:
obtaining (601; 701) first image data corresponding to a first pattern (411, 412, 413) through a pixel array by an image sensor (230) including a color filter array (310) of the first pattern and the pixel array (320) disposed below the color filter array;
obtaining (603; 705), by the image sensor, second image data by converting the first image data to correspond to a second pattern (421, 422) distinct from the first pattern;
obtaining (605; 711), by the image sensor, characteristic information for identifying brightness information related to saturation of the pixel array when obtaining the first image data and before converting the first image data;
outputting (607), by the image sensor, the second image data and the characteristic information;
obtaining (707, 713), by a processor electrically connected to the image sensor, the second image data and the characteristic information from the image sensor;
obtaining (609; 709) an image frame based on the second image data by the processor; and
controlling (611; 715, 717) exposure of a camera including the image sensor based on the characteristic information by the processor;
wherein the first pattern comprises color filters of a wider wavelength band than any of the red, R, green, G, and blue, B, filters and the second pattern comprises R, G and B filters only; and
wherein the characteristic information comprises at least one of an image histogram (830) of the first image data or a reduced image (930) corresponding to the first image data with one of reduced size, reduced resolution or down-scaling.

8. The operation method of claim 7, wherein the reduced image corresponds to the first pattern, and
the controlling of exposure of the camera based on the characteristic information by the processor comprises:
identifying the brightness information based on the characteristic information; and
controlling exposure of the camera based on the brightness information of the pixel array.

9. The operation method of claim 8, wherein the controlling of exposure of the camera based on the brightness information of the pixel array comprises reducing exposure of the camera in response to determining that the brightness information of the pixel array is equal to or greater than a specified level.

10. The operation method of claim 7, wherein the characteristic information further comprises a conversion function used for converting the first image data into the second image data, and
the controlling of exposure of the camera based on the characteristic information by the processor comprises:
obtaining an inverse conversion function, which is an inverse function of the conversion function, based on the conversion function;
obtaining third image data by converting the second image data to correspond to the first pattern by using the inverse conversion function;
identifying the brightness information based on the third image data; and
controlling exposure of the camera based on the brightness information of the pixel array.

11. The operation method of claim 7, wherein the controlling of exposure of the camera based on the characteristic information by the processor comprises adjusting at least one of an exposure time of the image sensor or an output gain of the image sensor based on the characteristic information.

## Patentansprüche

1. Elektronische Vorrichtung (101), umfassend:
einen Bildsensor (230), der eine Farbfilteranordnung (310) eines ersten Musters (411, 412, 413) und eine Pixelanordnung (320) enthält, die unter der Farbfilteranordnung angeordnet ist, und
mindestens einen Prozessor (120), der elektrisch mit dem Bildsensor verbunden ist,
wobei der Bildsensor zu Folgendem konfiguriert ist:
Erlangen (601; 701) erster Bilddaten, die dem ersten Muster entsprechen, durch die Pixelanordnung;
Erlangen (603; 705, 707) zweiter Bilddaten durch Umwandeln der ersten Bilddaten, sodass sie einem zweiten Muster (421, 422) entsprechen, das sich von dem ersten Muster unterscheidet;
Erlangen (605; 711, 713) von Eigenschaftsinformationen zum Identifizieren von Helligkeitsinformationen in Bezug auf eine Sättigung der Pixelanordnung beim Erlangen der ersten Bilddaten und vor dem Umwandeln der ersten Bilddaten; und
Bereitstellen (607) der zweiten Bilddaten und der Eigenschaftsinformationen für den mindestens einen Prozessor und
wobei der mindestens eine Prozessor zu Folgendem konfiguriert ist:
Erlangen (609; 709) eines Bild-Frames basierend auf den zweiten Bilddaten, die durch den Bildsensor bereitgestellt werden;
Steuern (611; 715, 717) einer Belichtung einer Kamera, die den Bildsensor enthält, basierend auf den Eigenschaftsinformationen, die durch den Bildsensor bereitgestellt werden; und
wobei das erste Muster Farbfilter eines breiteren Wellenlängenbandes als eines der Rot-, R-, Grün-, G-, und Blau-Filter, B-Filter, umfasst und das zweite Muster nur R-, G- und B-Filter umfasst; und
wobei die Eigenschaftsinformationen mindestens eines von einem Bildhistogramm (830) der ersten Bilddaten oder einem reduzierten Bild (930), das den ersten Bilddaten entspricht, mit einem von einer reduzierten Größe, einer reduzierten Auflösung oder einer Verkleinerung umfassen.

2. Elektronische Vorrichtung nach Anspruch 1, wobei die Eigenschaftsinformationen ferner eine Umwandlungsfunktion (1030) umfassen, die zum Umwandeln der ersten Bilddaten in die zweiten Bilddaten verwendet wird und
wobei der mindestens eine Prozessor zu Folgendem konfiguriert ist:
Erlangen einer inversen Umwandlungsfunktion, die eine inverse Funktion der Umwandlungsfunktion ist, auf Grundlage der Umwandlungsfunktion;
Erlangen dritter Bilddaten durch Umwandeln der zweiten Bilddaten, sodass sie dem ersten Muster entsprechen, unter Verwendung der inversen Umwandlungsfunktion;
Identifizieren der Helligkeitsinformationen in Bezug auf eine Sättigung der Pixelanordnung basierend auf den dritten Bilddaten; und
Steuern der Belichtung der Kamera basierend auf den Helligkeitsinformationen der Pixelanordnung.

3. Elektronische Vorrichtung nach Anspruch 1, wobei das reduzierte Bild dem ersten Muster entspricht und
wobei der mindestens eine Prozessor zu Folgendem konfiguriert ist:
Identifizieren, basierend auf den Eigenschaftsinformationen, der Helligkeitsinformationen; und
Steuern der Belichtung der Kamera basierend auf den Helligkeitsinformationen der Pixelanordnung.

4. Elektronische Vorrichtung nach Anspruch 3, wobei der mindestens eine Prozessor dazu konfiguriert ist, die Belichtung der Kamera als Reaktion auf ein Bestimmen, dass die Helligkeitsinformationen der Pixelanordnung gleich oder größer als ein spezifiziertes Niveau sind, zu reduzieren.

5. Elektronische Vorrichtung nach Anspruch 1, wobei der mindestens eine Prozessor dazu konfiguriert ist, mindestens eines von einer Belichtungszeit des Bildsensors oder einer Ausgabeverstärkung des Bildsensors basierend auf den Eigenschaftsinformationen einzustellen, um die Belichtung der Kamera zu steuern.

6. Elektronische Vorrichtung nach Anspruch 1, wobei die Helligkeit der zweiten Bilddaten geringer als die der ersten Bilddaten ist.

7. Betriebsverfahren einer elektronischen Vorrichtung, wobei das Betriebsverfahren Folgendes umfasst:
Erlangen (601; 701) erster Bilddaten, die einem ersten Muster (411, 412, 413) entsprechen, durch eine Pixelanordnung durch einen Bildsensor (230), der eine Farbfilteranordnung (310) des ersten Musters und die Pixelanordnung (320) enthält, die unter der Farbfilteranordnung angeordnet ist;
Erlangen (603; 705) zweiter Bilddaten durch den Bildsensor durch Umwandeln der ersten Bilddaten, sodass sie einem zweiten Muster (421, 422) entsprechen, das sich von dem ersten Muster unterscheidet;
Erlangen (605; 711) von Eigenschaftsinformationen durch den Bildsensor zum Identifizieren von Helligkeitsinformationen in Bezug auf eine Sättigung der Pixelanordnung beim Erlangen der ersten Bilddaten und vor dem Umwandeln der ersten Bilddaten;
Ausgeben (607) der zweiten Bilddaten und der Eigenschaftsinformationen durch den Bildsensor;
Erlangen (707, 713) der zweiten Bilddaten und der Eigenschaftsinformationen von dem Bildsensor durch einen Prozessor, der elektrisch mit dem Bildsensor verbunden ist;
Erlangen (609; 709) eines Bild-Frames basierend auf den zweiten Bilddaten durch den Prozessor; und
Steuern (611; 715, 717) einer Belichtung einer Kamera, die den Bildsensor enthält, basierend auf den Eigenschaftsinformationen durch den Prozessor;
wobei das erste Muster Farbfilter eines breiteren Wellenlängenbandes als eines der Rot-, R-, Grün-, G-, und Blau-Filter, B-Filter, umfasst und das zweite Muster nur R-, G- und B-Filter umfasst; und
wobei die Eigenschaftsinformationen mindestens eines von einem Bildhistogramm (830) der ersten Bilddaten oder einem reduzierten Bild (930), das den ersten Bilddaten entspricht, mit einem von einer reduzierten Größe, einer reduzierten Auflösung oder einer Verkleinerung umfassen.

8. Betriebsverfahren nach Anspruch 7, wobei das reduzierte Bild dem ersten Muster entspricht und
das Steuern der Belichtung der Kamera basierend auf den Eigenschaftsinformationen durch den Prozessor Folgendes umfasst:
Identifizieren der Helligkeitsinformationen basierend auf den Eigenschaftsinformationen; und
Steuern der Belichtung der Kamera basierend auf den Helligkeitsinformationen der Pixelanordnung.

9. Betriebsverfahren nach Anspruch 8, wobei das Steuern der Belichtung der Kamera basierend auf den Helligkeitsinformationen der Pixelanordnung Reduzieren der Belichtung der Kamera als Reaktion auf ein Bestimmen, dass die Helligkeitsinformationen der Pixelanordnung gleich oder größer als ein spezifiziertes Niveau sind, umfasst.

10. Betriebsverfahren nach Anspruch 7, wobei die Eigenschaftsinformationen ferner eine Umwandlungsfunktion umfassen, die zum Umwandeln der ersten Bilddaten in die zweiten Bilddaten verwendet wird und
das Steuern der Belichtung der Kamera basierend auf den Eigenschaftsinformationen durch den Prozessor Folgendes umfasst:
Erlangen einer inversen Umwandlungsfunktion, die eine inverse Funktion der Umwandlungsfunktion ist, auf Grundlage der Umwandlungsfunktion;
Erlangen dritter Bilddaten durch Umwandeln der zweiten Bilddaten, sodass sie dem ersten Muster entsprechen, unter Verwendung der inversen Umwandlungsfunktion;
Identifizieren der Helligkeitsinformationen basierend auf den dritten Bilddaten; und
Steuern der Belichtung der Kamera basierend auf den Helligkeitsinformationen der Pixelanordnung.

11. Betriebsverfahren nach Anspruch 7, wobei das Steuern der Belichtung der Kamera basierend auf den Eigenschaftsinformationen durch den Prozessor Einstellen mindestens eines von einer Belichtungszeit des Bildsensors oder einer Ausgabeverstärkung des Bildsensors basierend auf den Eigenschaftsinformationen umfasst.

## Revendications

1. Dispositif électronique (101) comprenant :
un capteur d'image (230) comprenant un réseau de filtres colorés (310) d'un premier motif (411, 412, 413) et un réseau de pixels (320) disposé sous le réseau de filtres colorés, et
au moins un processeur (120) connecté électriquement au capteur d'image,
dans lequel le capteur d'image est configuré pour :
obtenir (601 ; 701) des premières données d'image correspondant au premier motif à travers le réseau de pixels ;
obtenir (603 ; 705, 707) des secondes données d'image en convertissant les premières données d'image pour qu'elles correspondent à un second motif (421, 422) distinct du premier motif ;
obtenir (605 ; 711, 713) des informations de caractéristiques pour identifier des informations de luminosité liées à la saturation du réseau de pixels lors de l'obtention des premières données d'image et avant la conversion des premières données d'image ; et
fournir (607) les secondes données d'image et les informations de caractéristiques à l'au moins un processeur, et
dans lequel l'au moins un processeur est configuré pour :
obtenir (609 ; 709) une trame d'image sur la base des secondes données d'image fournies par le capteur d'image ;
commander (611 ; 715, 717) l'exposition d'une caméra comprenant le capteur d'image sur la base des informations de caractéristiques fournies par le capteur d'image ; et
dans lequel le premier motif comprend des filtres colorés d'une bande de longueur d'onde plus large que l'un quelconque de filtres rouge, R, vert, G et bleu, B, et le second motif comprend uniquement des filtres R, G et B ; et
dans lequel les informations de caractéristique comprennent au moins l'un d'un histogramme d'image (830) des premières données d'image ou d'une image réduite (930) correspondant aux premières données d'image avec l'une d'une taille réduite, d'une résolution réduite ou d'une réduction d'échelle.

2. Dispositif électronique selon la revendication 1, dans lequel les informations de caractéristique comprennent en outre une fonction de conversion (1030) utilisée pour convertir les premières données d'image en les secondes données d'image et
dans lequel l'au moins un processeur est configuré pour :
obtenir une fonction de conversion inverse, qui est une fonction inverse de la fonction de conversion, sur la base de la fonction de conversion ;
obtenir des troisièmes données d'image en convertissant les secondes données d'image pour qu'elles correspondent au premier motif en utilisant la fonction de conversion inverse ;
identifier les informations de luminosité liées à la saturation du réseau de pixels sur la base des troisièmes données d'image ; et
commander l'exposition de la caméra sur la base des informations de luminosité du réseau de pixels.

3. Dispositif électronique selon la revendication 1, dans lequel l'image réduite correspond au premier motif, et
dans lequel l'au moins un processeur est configuré pour :
identifier, sur la base des informations de caractéristiques, les informations de luminosité ; et
commander l'exposition de la caméra sur la base des informations de luminosité du réseau de pixels.

4. Dispositif électronique selon la revendication 3, dans lequel l'au moins un processeur est configuré pour réduire l'exposition de la caméra en réponse à la détermination que les informations de luminosité du réseau de pixels sont égales ou supérieures à un niveau spécifié.

5. Dispositif électronique selon la revendication 1, dans lequel l'au moins un processeur est configuré pour ajuster au moins l'un d'un temps d'exposition du capteur d'image ou d'un gain de sortie du capteur d'image sur la base des informations de caractéristiques pour commander l'exposition de la caméra.

6. Dispositif électronique selon la revendication 1, dans lequel la luminosité des secondes données d'image est inférieure à celle des premières données d'image.

7. Procédé de fonctionnement d'un dispositif électronique, le procédé de fonctionnement comprenant :
l'obtention (601 ; 701) de premières données d'image correspondant à un premier motif (411, 412, 413) à travers un réseau de pixels par un capteur d'image (230) comprenant un réseau de filtres colorés (310) du premier motif et le réseau de pixels (320) disposé sous le réseau de filtres colorés ;
l'obtention (603 ; 705), par le capteur d'image, de secondes données d'image en convertissant les premières données d'image pour qu'elles correspondent à un second motif (421, 422) distinct du premier motif ;
l'obtention (605 ; 711), par le capteur d'image, d'informations de caractéristiques pour identifier des informations de luminosité liées à la saturation du réseau de pixels lors de l'obtention des premières données d'image et avant la conversion des premières données d'image ;
la sortie (607), par le capteur d'image, des secondes données d'image et des informations de caractéristiques ;
l'obtention (707, 713), par un processeur connecté électriquement au capteur d'image, des secondes données d'image et des informations de caractéristiques du capteur d'image ;
l'obtention (609 ; 709) d'une trame d'image sur la base des secondes données d'image par le processeur ; et
la commande (611 ; 715, 717) de l'exposition d'une caméra comprenant le capteur d'image sur la base des informations de caractéristiques par le processeur ;
dans lequel le premier motif comprend des filtres colorés d'une bande de longueur d'onde plus large que l'un quelconque des filtres rouge, R, vert, G et bleu, B, et le second motif comprend uniquement des filtres R, G et B ; et
dans lequel les informations de caractéristique comprennent au moins l'un d'un histogramme d'image (830) des premières données d'image ou d'une image réduite (930) correspondant aux premières données d'image avec l'une d'une taille réduite, d'une résolution réduite ou d'une réduction d'échelle.

8. Procédé de fonctionnement selon la revendication 7, dans lequel l'image réduite correspond au premier motif, et
la commande de l'exposition de la caméra sur la base des informations de caractéristiques par le processeur comprend :
l'identification des informations de luminosité sur la base des informations de caractéristiques ; et
la commande de l'exposition de la caméra sur la base des informations de luminosité du réseau de pixels.

9. Procédé de fonctionnement selon la revendication 8, dans lequel la commande de l'exposition de la caméra sur la base des informations de luminosité du réseau de pixels comprend la réduction de l'exposition de la caméra en réponse à la détermination que les informations de luminosité du réseau de pixels sont égales ou supérieures à un niveau spécifié.

10. Procédé de fonctionnement selon la revendication 7, dans lequel les informations de caractéristique comprennent en outre une fonction de conversion utilisée pour convertir les premières données d'image en les secondes données d'image, et
la commande de l'exposition de la caméra sur la base des informations de caractéristiques par le processeur comprend :
l'obtention d'une fonction de conversion inverse, qui est une fonction inverse de la fonction de conversion, sur la base de la fonction de conversion ;
l'obtention de troisièmes données d'image en convertissant les secondes données d'image pour qu'elles correspondent au premier motif en utilisant la fonction de conversion inverse ;
l'identification des informations de luminosité sur la base des troisièmes données d'image ; et
la commande de l'exposition de la caméra sur la base des informations de luminosité du réseau de pixels.

11. Procédé de fonctionnement selon la revendication 7, dans lequel la commande de l'exposition de la caméra sur la base des informations de caractéristiques par le processeur comprend l'ajustement d'au moins l'un d'un temps d'exposition du capteur d'image ou d'un gain de sortie du capteur d'image sur la base des informations de caractéristiques.
